# EUROPÄISCHE PATENTANMELDUNG

(11) **EP 4 293 309 A1**
(43) Veröffentlichungstag der Anmeldung: **20.12.2023**
(21) Anmeldenummer: 23173517.6
(22) Anmeldetag: 16.05.2023
(51) Int. Cl.: F28F 9/02, F28F 9/26, H01M 8/04029, H01M 10/613, H01M 10/625, H01M 10/6557, H01M 10/6567

(54) **KÜHLANORDNUNG FÜR EINE ELEKTRISCHE ANTRIEBSKOMPONENTE UND DAMIT AUSGESTATTETE ELEKTRISCHE ANTRIEBSKOMPONENTE**

(30) Priorität: 15.06.2022 DE 102022206046
(71) Anmelder: Siemens Mobility GmbH, 81739 München (DE)
(72) Erfinder: Kasap, Irfan, 44653 Herne (DE)
(74) Vertreter: Siemens Patent Attorneys

(57) **Zusammenfassung**

Die Erfindung betrifft eine Kühlanordnung für eine elektrische Antriebskomponente, wie eine Batterie oder eine Brennstoffzelle, zum Führen eines Kühlmediums, mit einer von einer Einlassöffnung (2) ausgehenden Haupt-Einlassleitung (1), einer in eine Auslassöffnung (4) mündenden Haupt-Auslassleitung (3) und einer zwischen der Haupt-Einlassleitung (1) und der Haupt-Auslassleitung (3) angeordneten, allgemein quaderförmig ausgebildeten Röhrchenanordnung (RA1, ...), wobei von der Haupt-Einlassleitung (1) wenigstens ein Einlass-Zweig (EZ1, ...) mit wenigstens zwei, entlang der Haupt-Einlassleitung (1) hintereinander angeordneten Einlass-Trögen (ET11, ...) ausgeht, und die Haupt-Auslassleitung (3) wenigstens einen, dem Einlass-Zweig (EZ1, ...) zugeordneten Auslass-Zweig (AZ1, ...) mit wenigstens zwei Auslass-Trögen (AT11, ...) aufweist, wobei ferner jeder Einlass-Trog (ET11, ...) über eine Einlass-Sammelleitung (ES11, ...), mehrere zwischen der Einlass-Sammelleitung (ES11, ...) und einer der Einlass-Sammelleitung (ES11, ...) zugeordneten Auslass-Sammelleitung (AS11, ...) und parallel zueinander angeordnete Abschnitte der Röhrchenanordnung (RA1, ...) und die zugeordnete Auslass-Sammelleitung (AS11, ...) mit einem Auslass-Trog (AT11, ...) strömungstechnisch verbunden ist, wobei zudem freie Querschnitte der Einlass-Tröge (ET11, ...) und/oder der Auslass-Tröge (AT11, ...) derart bemessen sind, dass sich in den verschiedenen Abschnitten der Röhrchen-Anordnung (RA1,...) eine Vergleichmäßigung der Strömungsgeschwindigkeit des Kühlmediums ergibt, sowie eine elektrische Antriebsvorrichtung.

## Beschreibung

Die Erfindung bezieht sich auf eine Kühlanordnung für eine elektrische Antriebskomponente, wie eine Batterie oder eine Brennstoffzelle, sowie auf eine mit einer solchen Kühlanordnung ausgestattete elektrische Antriebskomponente.

Die Erfindung geht aus von einer Kühlanordnung für eine elektrische Antriebskomponente, wie eine Batterie oder eine Brennstoffzelle, zum Führen eines Kühlmediums, mit einer von einer Einlassöffnung ausgehenden Haupt-Einlassleitung, einer in eine Auslassöffnung mündenden Haupt-Auslassleitung und einer zwischen der Haupt-Einlassleitung und der Haupt-Auslassleitung angeordneten, allgemein quaderförmig ausgebildeten Röhrchenanordnung, wobei von der Haupt-Einlassleitung wenigstens ein Einlass-Zweig mit wenigstens zwei, entlang der Haupt-Einlassleitung hintereinander angeordneten Einlass-Trögen ausgeht, und die Haupt-Auslassleitung wenigstens einen, dem Einlass-Zweig zugeordneten Auslass-Zweig mit wenigstens zwei Auslass-Trögen aufweist, wobei ferner jeder Einlass-Trog über eine Einlass-Sammelleitung, mehrere zwischen der Einlass-Sammelleitung und einer der Einlass-Sammelleitung zugeordneten Auslass-Sammelleitung und parallel zueinander angeordnete Abschnitte der Röhrchenanordnung und die zugeordnete Auslass-Sammelleitung mit einem Auslass-Trog strömungstechnisch verbunden ist.

Eine solche Kühlanordnung wird auch als "Chiller" bezeichnet und ist in die zu kühlende elektrische Antriebskomponente integriert. Typischer Weise umfasst eine Batterie und eine Brennstoffzelle eine Anzahl Zellen, die allgemein quaderförmig gebaut sind. Dabei ist die Kühlanordnung in die Zellenstruktur der Batterie oder der Brennstoffzelle eingebettet, um eine effektive Kühlung der Batterie und der Brennstoffzelle zu gewährleisten. In dieser Weise wird sichergestellt, dass eine Temperatur einer Batterie oder Brennstoffzelle in einem zulässigen Bereich gehalten wird, insbesondere, wenn die betreffende elektrische Antriebskomponente in Betrieb ist.

Bei einer solchen bekannten Kühlanordnung ergibt sich eine umfangreiche Verzweigung der erforderlichen Strömungskanäle, wie Tröge, Sammelleitungen und Röhrchen, für das Kühlmedium. Dabei ergibt sich die Schwierigkeit, bei einem Lade- oder Entladevorgang in den diversen, parallel zueinander angeordneten Strömungskanälen des Kühlmediums einen möglichst gleichmäßigen Massenstrom für das Kühlmedium zu realisieren.

Diese Problematik hat zur Folge, dass in bestimmten Bereichen der elektrischen Antriebskomponente die Kühlung mit Hilfe einer Kühlanordnung deutlich effektiver ist als in anderen Bereichen mit reduziertem Massenstrom.

Ausgehend hiervon liegt der Erfindung die Aufgabe zugrunde, eine Kühlanordnung der eingangs genannten Art derart weiterzuentwickeln, dass sich eine Vergleichmäßigung des Massenstroms des Kühlmediums ergibt, sowie eine elektrische Antriebskomponente anzugeben, die sich durch räumlich gleichmäßige Kühlverhältnisse auszeichnet.

Diese Aufgabe wird hinsichtlich der Kühlanordnung gelöst durch eine Kühlanordnung nach Anspruch 1.

Danach zeichnet sich die eingangs beschriebene Kühlanordnung dadurch aus, dass freie Querschnitte der Einlass-Tröge und/oder der Auslass-Tröge derart bemessen sind, dass sich in den verschiedenen Abschnitten der Röhrchen-Anordnung eine Vergleichmäßigung der Strömungsgeschwindigkeit des Kühlmediums ergibt.

In dieser Weise wird es durch Festlegung der freien Querschnitte der Einlass-Tröge und/oder der Auslass-Tröge möglich, eine Vergleichmäßigung der Strömungsgeschwindigkeit des Kühlmediums zu erreichen.

Bevorzugt sind zur Vergleichmäßigung der Strömungsgeschwindigkeiten in den verschiedenen Abschnitten der Röhrchen-Anordnung Blenden vorgesehen. Diese Blenden sind so dimensioniert, dass sich die gewünschte Vergleichmäßigung der Strömungsgeschwindigkeit des Kühlmediums ergibt. Vorteilhafterweise sind die Blenden in einem jeweiligen Anschlussbereich der Einlass-Tröge an die Haupt-Einlassleitung vorgesehen. In dieser Weise wird auf der Einlassseite der Kühlanordnung durch entsprechende Dimensionierung der freien Querschnitte der Blenden sichergestellt, dass sich die Vergleichmäßigung der Strömungsgeschwindigkeiten für das Kühlmedium in der Röhrchen-Anordnung ergibt.

Grundsätzlich denkbar ist aber auch, dass die Blenden an beliebiger Stelle entlang der Einlass- und/oder Auslass-Tröge oder auch in Endbereichen der Sammelleitungen angeordnet sind.

Es ist von Vorteil, wenn der freie Querschnitt des der Einlassöffnung der Haupt-Einlassleitung nächstgelegenen Einlass-Trogs ≥ den freien Querschnitten der weiteren Einlass-Tröge desselben Einlass-Zweiges ist. Damit lässt sich erreichen, dass sich eine Vergleichmäßigung der Strömungsgeschwindigkeiten für das Kühlmedium über einen Einlass-Zweig der Kühlanordnung ergibt. Alternativ wäre es auch möglich, die freien Querschnitte auf der Auslassseite der Kühlanordnung entsprechend zu wählen und freie Querschnitte in den Auslass-Trögen derart zu wählen, dass sich die gewünschte Vergleichmäßigung der Strömungsgeschwindigkeiten des Kühlmediums ergibt.

Bevorzugt ist der freie Querschnitt des der Einlassöffnung der Haupt-Einlassleitung nächstgelegenen Einlass-Trogs > dem freien Querschnitt des der Einlass-Öffnung am weitesten entfernt gelegenen Einlass-Trogs desselben Einlass-Zweiges. Es ist hervorzuheben, dass eine Verbesserung der Vergleichsmäßigung der Strömungsgeschwindigkeit des Kühlmediums auch dann schon erzielt werden kann, wenn lediglich in einem von mehreren Einlass-Zweigen unterschiedliche freie Querschnitte der Einlass-Tröge gewählt werden.

Entlang der Haupt-Einlassleitung können wenigstens zwei hintereinander angeordnete Einlass-Zweige vorgesehen sein und ein mittlerer freier Querschnitt der Einlass-Tröge eines der Einlass-Zweige kann mit zunehmendem Abstand dieses Einlass-Zweiges zu der Eingangs-Öffnung der Haupt-Einlassleitung zunehmen. Dies hat den Vorteil, dass über die in verschiedenem Abstand zu der Eingangs-Öffnung der Haupt-Einlassleitung liegende Zweige vergleichmäßigte Strömungsgeschwindigkeiten für das Kühlmedium vorliegen.

Hinsichtlich der elektrischen Antriebskomponente wird die oben angegebenen Aufgabe gelöst durch eine elektrische Antriebskomponente nach Anspruch 7.

Bevorzugt sind die Röhrchen der Röhrchenanordnung auf zueinander parallelen Ebenen angeordnet und Zellen der elektrischen Antriebskomponente sind in freien Zwischenräumen der Röhrchenanordnung angeordnet.

Ausführungsbeispiele der Erfindung werden nachfolgend unter Bezugnahme auf die Zeichnungen noch näher erläutert. Funktionsgleiche Komponenten sind in den Figuren teilweise mit denselben Bezugszeichen bezeichnet. Es zeigen:
- Figur 1: eine perspektivische Ansicht einer Kühlanordnung für eine Brennstoffzelle,
- Figur 2: eine perspektivische Ansicht einer Brennstoffzelle, ausgestattet mit einer Kühlanordnung nach Figur 1,
- Figur 3: eine perspektivische Ansicht eines Strömungskanalabschnitts der Kühlanordnung von Figur 1
- Figur 4: eine perspektivische, freigeschnittene Ansicht des Strömungskanalabschnitts von Figur 3 mit eingesetzter Blende,
- Figur 5: eine perspektivische Ansicht einer Kühlanordnung für eine Batterie,
- Figur 6: eine perspektivische, teilweise freigeschnittene Ansicht einer Batterie, ausgestattet mit einer Kühlanordnung nach Figur 5, und
- Figur 7: ein Blendenbelegungsplan der Kühlanordnung nach Figur 5.

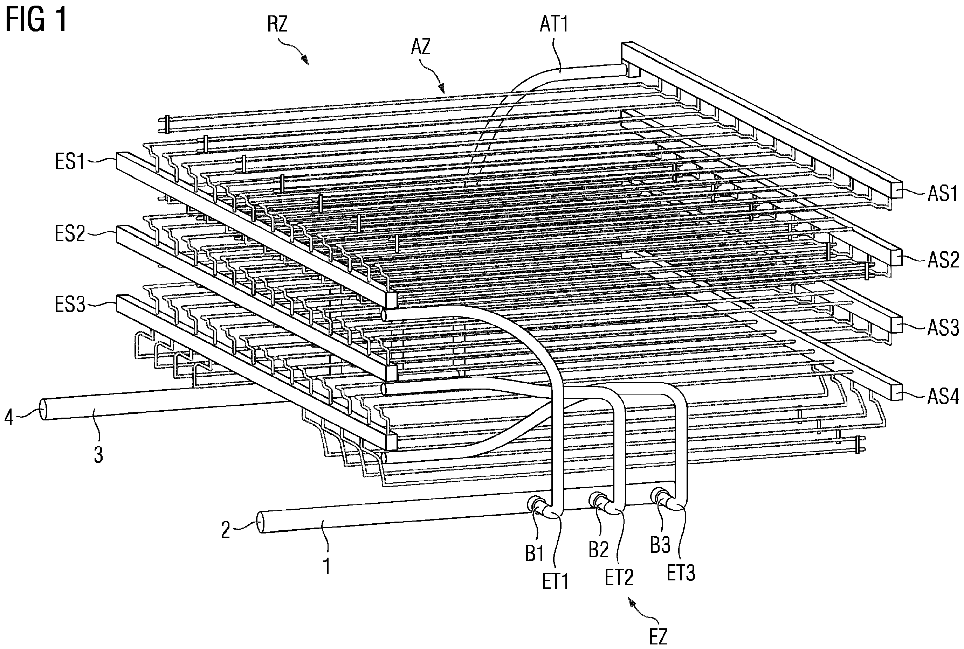

Figur 1 zeigt eine Kühlanordnung für eine Batterie eines Brennstoffzellenzuges, bei dem Brennstoffzellen zum Antrieb eines Schienenfahrzeugs eingesetzt sind, wobei die Kühlanordnung eine Einlass-Hauptleitung 1 für ein Kühlmedium, beispielsweise Wasser, sowie einen einzelnen Einlass-Zweig EZ mit insgesamt drei Einlass-Trögen ET1, ET2, ET3 aufweist, die jeweils in einem voneinander verschiedenen
Abstand zu einer Einlassöffnung 2 der Einlass-Hauptleitung 1 an die Einlass-Hauptleitung 1 angeschlossen sind. Der Einlass-Hauptleitung 1 entfernte Enden der Einlass-Tröge ET1, ET2, ET3 sind an jeweils zugeordnete Einlass-Sammelleitungen ES1, ES2, ES3 angeschlossen. Dabei sind die Einlass-Sammelleitungen ES1, ES2, ES3 vertikal übereinander angeordnet. Zudem umfasst die Kühlanordnung insgesamt vier ebenfalls vertikal übereinander angeordnete Auslass-Sammelleitungen AS1, AS2, AS3, AS4. Dabei ist die Einlass-Sammelleitung ES1 über eine Mehrzahl parallel zueinander geschalteter Abschnitte einer Röhrchenanordnung RA mit der Auslass-Sammelleitung AS1 verbunden, wobei mit einem "Röhrchen-Abschnitt" eine Anzahl zueinander in Reihe geschalteter Einzelröhrchen, die eine strömungstechnische Verbindung zwischen der Einlass-Sammelleitung ES1 und der Auslass-Sammelleitung AS1 bilden, gemeint ist. In gleicher Weise ist die Einlass-Sammelleitung ES2 mit der Auslass-Sammelleitung AS2 verbunden. Demgegenüber sind der Einlass-Sammelleitung ES3 die beiden Auslass-Sammelleitungen AS3 und AS4 zugeordnet.

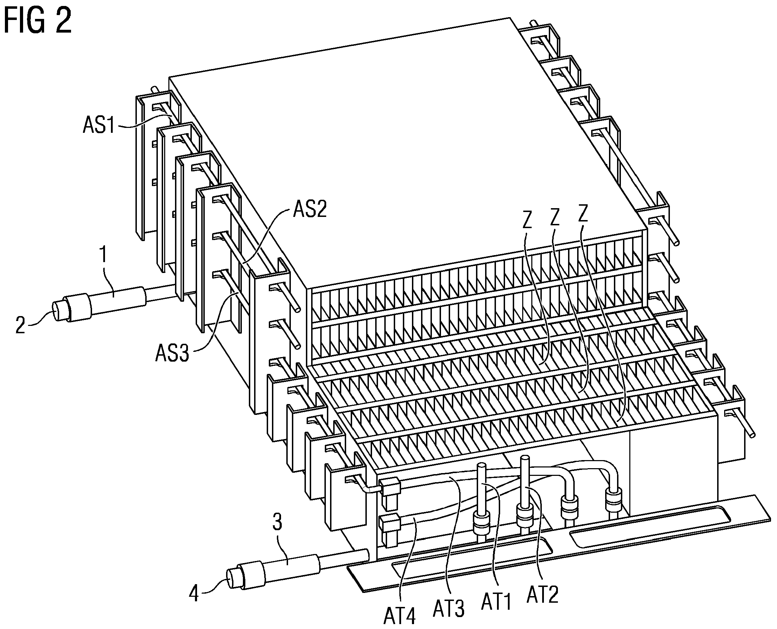

Insgesamt ergibt sich die Röhrchenanordnung RA, bei der Einzelröhrchen der zuvor erwähnten Abschnitte auf mehrere Vertikalebenen verteilt sind, so dass Zwischenräume zwischen diesen Ebenen verbleiben. In diesen Zwischenräumen können Zellen Z der Batterie eines Brennstoffzellenzuges aufgenommen sein, die mit Hilfe der Kühlanordnung auf einer zulässigen Betriebstemperatur gehalten werden, vgl. Fig.2.

Von den Auslass-Sammelleitungen AS1, AS2, AS3, AS4 aus fließt das Kühlmedium über Auslass-Tröge AT1, AT2, AT3, AT4 (vgl. Figur 2) eines Auslass-Zweiges AZ in eine Auslass-Hauptleitung 3. Über eine Auslass-Öffnung 4 verlässt das erwärmte Kühlmedium die Kühlanordnung, wird mit Hilfe eines Kühlers auf eine geeignete Einlasstemperatur heruntergekühlt und sodann über die Einlass-Öffnung 2 wieder in die Kühlanordnung eingeleitet.

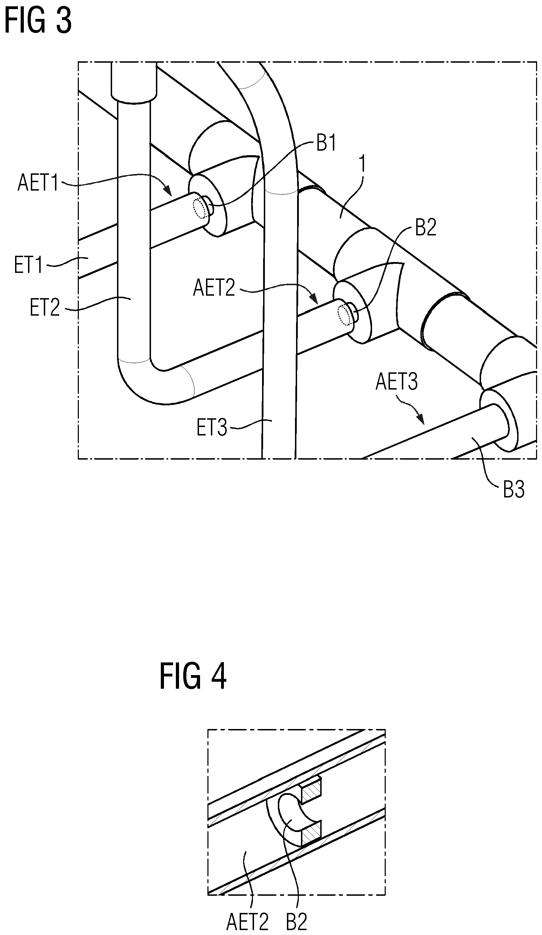

Wie aus Fig. 3 hervor geht, sind die Einlass-Tröge ET1, ET2, ET3 in ihren Anschlussbereichen AET1, AET2, AET3 an die Haupt-Einlassleitung 1 mit Blenden B1, B2, B3 ausgestattet, die für eine Vergleichmäßigung der Strömung des Kühlmediums in der Röhrchenanordnung RA dimensioniert sind. Im Ausführungsbeispiel nach Figur 1 betragen freie Querschnitte der Blenden B1, B2, B3 13mm, 10mm bzw. 10mm.

Figur 4 veranschaulicht, in welcher Weise die Blende B2 von Figur 3 in den Anschlussbereich AET2 eingesetzt ist, so dass der geeignete freie Querschnitt für den Einlass-Trog ET2 realisiert wird.

Es ist hervorzuheben, dass unter den Begriff "Blende" nicht notwendigerweise ausschließlich ein ringförmiges Bauteil zu verstehen ist, wie es in Figur 4 dargestellt ist, sondern auch ein Rohrabschnitt, dessen freier Querschnitt bzw. Innendurchmesser derart gewählt ist, dass sich die gewünschte Vergleichmäßigung der Strömungsgeschwindigkeit des Kühlmediums in der Röhrchenanordnung RA ergibt.

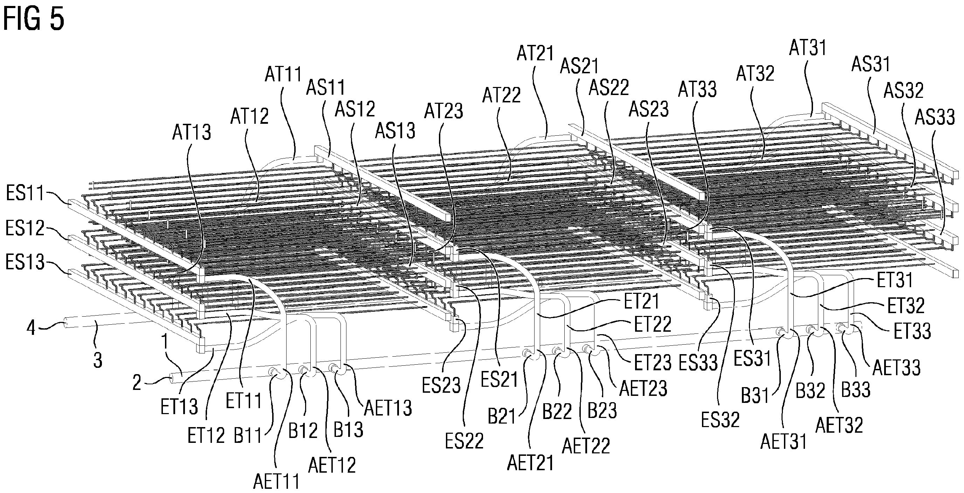

Figur 5 zeigt eine Kühlanordnung für eine Batterie zum Antrieb eines Schienenfahrzeugs. Die Kühlanordnung umfasst wiederum eine Haupt-Einlassleitung 1 mit einer Einlassöffnung 2 sowie eine Haupt-Auslassleitung 3 mit einer Auslassöffnung 4. Die Kühlanordnung umfasst drei, von der Einlass-Hauptleitung 1 ausgehende Einlass-Zweige EZ1, EZ2, EZ3 sowie drei in die Auslass-Hauptleitung 3 mündende Auslass-Zweige AZ1, AZ2, AZ3. Jeder der Einlass-Zweige EZ1, EZ2, EZ3 umfasst drei Einlass-Tröge ET11, ET12, ET13, ET21, ET22, ET23, ET31, ET32, ET33, wobei jedem der Einlass-Tröge ET11, ET12, ET13, ET21, ET22, ET23, ET31, ET32, ET33, ein Auslasstrog AT11, AT12, AT13, AT21, AT22, AT23, AT31, AT32, AT33 eindeutig zugeordnet ist.

Des Weiteren ist jedem der Einlass-Tröge ET11, ET12, ET13, ET21, ET22, ET23, ET31, ET32, ET33, eine Einlass-Sammelleitung ES11, ES12, ES13, ES21, ES22, ES23, ES31, ES32, ES33 eine Auslass-Sammelleitung AS11, AS12, AS13, AS21, AS22, AS23, AS31, AS32, AS33 und ein Auslass-Trog AT11, AT12, AT13, AT21, AT22, AT23, AT31, AT32, AT33 zugeordnet, wobei zwischen einer Einlass-Sammelleitung ES11, ES12, ES13, ES21, ES22, ES23, ES31, ES32, ES33 und einer zugeordneten Auslass-Sammelleitung AS11, AS12, AS13, AS21, AS22, AS23, AS31, AS32, AS33 ein jeweiliger Abschnitt einer Röhrchenanordnung RA1, RA2, RA3 angeordnet ist.

Anders ausgedrückt, ist jedem der Einlasszweige EZ1, EZ2, EZ3 eine Röhrchen-Anordnung RA1, RA2, RA3 zugeordnet, welche räumlich jeweils zwischen den zugehörigen Einlass-Sammelleitungen ES11, ES12, ES13 bzw. ES21, ES22, ES23 bzw. ES31, ES32, ES33 und Auslass-Sammelleitungen AS11, AS12, AS13 bzw. AS21, AS22, AS23 bzw. AS31, AS32, AS33 platziert ist. Ähnlich wie im Ausführungsbeispiel nach Figur 1 ist jeder Einlass-Trog ET11, ET12, ET13, ET21, ET22, ET23, ET31, ET32, ET33 über eine Einlass-Sammelleitung ES11, ES12, ES13, ES21, ES22, ES23, ES31, ES32, ES33, mehrere zwischen der Einlass-Sammelleitung ES11, ES12, ES13, ES21, ES22, ES23, ES31, ES32, ES33 und einer der Einlass-Sammelleitung ES11, ES12, ES13, ES21, ES22, ES23, ES31, ES32, ES33 zugeordnete Auslass-Sammelleitung AS11, AS12, AS13, AS21, AS22, AS23, AS31, AS32, AS33 und parallel zueinander angeordnete Abschnitte der Röhrchenanordnung RA1, RA2, RA3 und die zugeordnete Auslass-Sammelleitung AS11, AS12, AS13, AS21, AS22, AS23, AS31, AS32, AS33 mit einem Auslass-Trog AT11, AT12, AT13, AT21, AT22, AT23, AT31, AT32, AT33 strömungstechnisch verbunden.

Aus Figur 5 geht außerdem hervor, dass sämtliche Einlass-Tröge ET11, ET12, ET13, ET21, ET22, ET23, ET31, ET32, ET33 in ihren Anschlussbereichen AET11, AET12, AET13, AET21, AET22, AET23, AET31, AET32, AET33 an die Einlass-Hauptleitung 1 mit Blenden B11, B12, B13, B21, B22, B23, B31, B32, B33 ausgestattet sind. Diese Blenden sind hinsichtlich ihres freien Querschnitts für das durchströmende Kühlmedium so bemessen, dass sich eine Vergleichmäßigung der Strömungsgeschwindigkeit in den Röhrchenabschnitten RA1, RA2, RA3 ergibt.

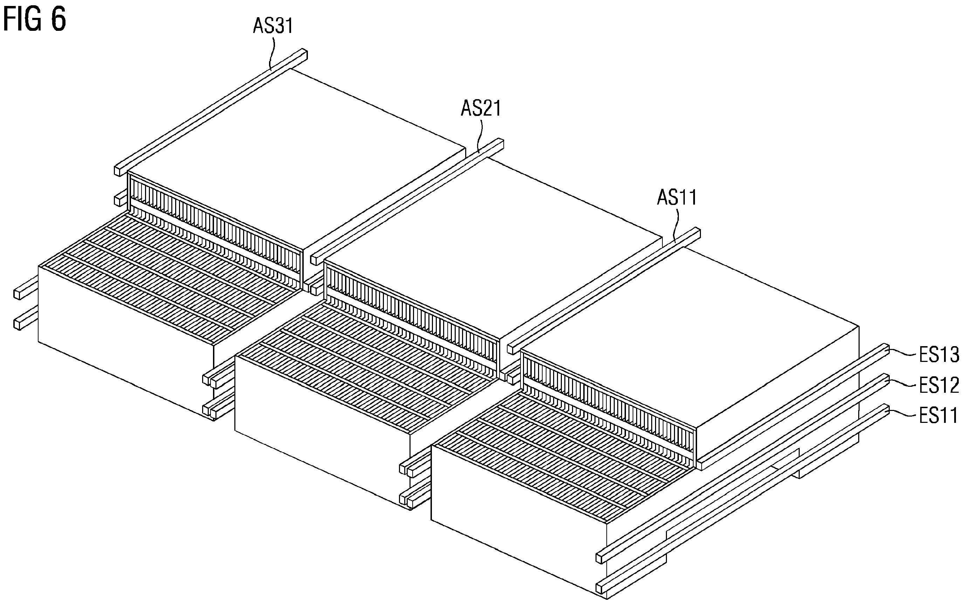

Figur 6 veranschaulicht eine Integration der Kühlanordnung der Figur 5 in eine Batterie zum Antrieb eines Schienenfahrzeugs. Es ist ersichtlich, dass die Röhrchenanordnungen RA1, RA2, RA3 freie Zwischenräume aufweisen, in die Zellen der Batterie eingesetzt sind. In dieser Weise erfolgt eine effektive Kühlung der Batterie mit Hilfe der Kühleinrichtung.

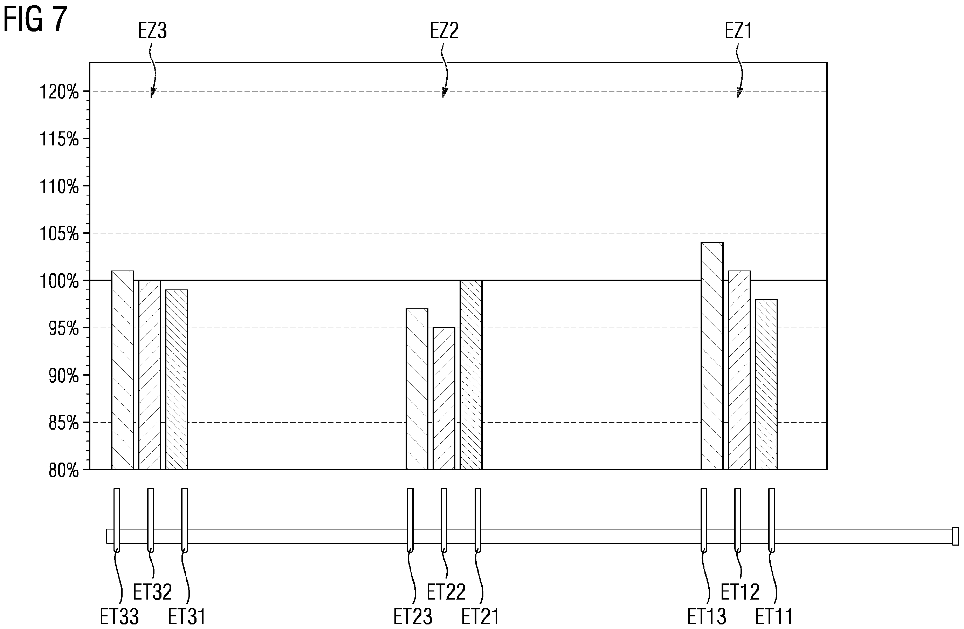

Figur 7 zeigt einen Blendenbelegungsplan für die Einlass-Zweige EZ1, EZ2, EZ3. Dabei entspricht 100% einer Durchflussrate am Einlass-Trog / Durchnittsdurchflussmenge pro Einlass-Trog. Die Durchschnittsdurchflussmenge ergibt sich aus der Gesamtdurchflussmenge / Anzahl der Einlass-Tröge.

Es ist ersichtlich, dass im Einlass-Zweig EZ1 über alle Einlass-Tröge ET11, ET12, ET13 der freie Querschnitt der eingesetzten Blende konstant 10mm beträgt. Die freien Querschnitte der Einlass-Tröge ET22, ET23 betragen ebenfalls 10mm, während der freie Querschnitt des Einlass-Troges ET21 13mm ist. Auch im Einlasszweig EZ3 ist der freie Querschnitt über sämtliche Einlass-Tröge ET31, ET32, ET33 gleich und entspricht 13mm.

Es ist zu berücksichtigen, dass der Einlasszweig EZ1 der Einlassöffnung 2 der Einlass-Hauptleitung 1 am nächsten liegt. Mit zunehmendem Abstand von der Einlass-Öffnung 2 folgen der Einlass-Zweig EZ2, sodann der Einlasszweig EZ3.

Es ist ersichtlich, dass innerhalb eines der Einlass-Zweige EZ1, EZ2, EZ3 der freie Querschnitt eines Einlass-Trogs ET11, ET12, ET13, ET21, ET22, ET23, ET31, ET32, ET33 mit zunehmendem Abstand zur Einlass-Öffnung 2 entweder gleichbleibt oder abnimmt, vgl. Einlass-Trog EZ2. Mit zunehmendem Abstand zur Einlass-Öffnung 2 nimmt der mittlere freie Querschnitt der Einlass-Tröge ET11, ET12, ET13, ET21, ET22, ET23, ET31, ET32, ET33 eines Einlass-Zweiges EZ1, EZ2, EZ3 zu, im Beispiel von 10mm über 11 mm zu 13 mm.

Figur 8 veranschaulicht zudem, dass sich durch die gewählten freien Querschnitte für die Einlass-Tröge ET11, ET12, ET13, ET21, ET22, ET23, ET31, ET32, ET33 eine erhebliche Vergleichmäßigung der Strömungsgeschwindigkeiten in den Röhrchenanordnungen RA1, RA2, RA3 ergibt. Diese ließe sich noch weiter dadurch verbessern, dass die jeweiligen freien Querschnitte noch weiter durch zutreffende Wahl der Blendengröße bzw. deren freien Querschnitt optimiert wird. Folge wäre jedoch, dass weniger Gleichteile für die Blenden B11, B12, B13, B21, B22, B23, B31, B32, B33 benutzt werden könnten.

## Patentansprüche

1. Kühlanordnung für eine elektrische Antriebskomponente, wie eine Batterie, zum Führen eines Kühlmediums, mit einer von einer Einlassöffnung (2) ausgehenden Haupt-Einlassleitung (1), einer in eine Auslassöffnung (4) mündenden Haupt-Auslassleitung (3) und einer zwischen der Haupt-Einlassleitung (1) und der Haupt-Auslassleitung (3) angeordneten, allgemein quaderförmig ausgebildeten Röhrchenanordnung (RA; RA1, RA2, RA3),
wobei von der Haupt-Einlassleitung (1) wenigstens ein Einlass-Zweig (EZ; EZ1, EZ2, EZ3) mit wenigstens zwei, entlang der Haupt-Einlassleitung (1) hintereinander angeordneten Einlass-Trögen (ET1, ET2, ET3; ET11, ET12, ET13, ET21, ET22, ET23, ET31, ET32, ET33) ausgeht, und die Haupt-Auslassleitung (3) wenigstens einen, dem Einlass-Zweig (EZ; EZ1, EZ2, EZ3) zugeordneten Auslass-Zweig (AZ; AZ1, AZ2, AZ3) mit wenigstens zwei Auslass-Trögen (AT1, AT2, AT3, AT4; AT11, AT12, AT13, AT21, AT22, AT23, AT31, AT32, AT33) aufweist,
wobei ferner jeder Einlass-Trog (ET1, ET2, ET3; ET11, ET12, ET13, ET21, ET22, ET23, ET31, ET32, ET33) über eine Einlass-Sammelleitung (ES1, ES2, ES3), mehrere zwischen der Einlass-Sammelleitung (ES1, ES2, ES3) und einer der Einlass-Sammelleitung (ES1, ES2, ES3) zugeordneten Auslass-Sammelleitung (AS1, AS2, AS3, AS4; AS11, AS12, AS13, AS21, AS22, AS23, AS31, AS32, AS33) und parallel zueinander angeordnete Abschnitte der Röhrchenanordnung (RA; RA1, RA2, RA3) und die zugeordnete Auslass-Sammelleitung (AS1, AS2, AS3, AS4; AS11, AS12, AS13, AS21, AS22, AS23, AS31, AS32, AS33) mit einem Auslass-Trog (AT1, AT2, AT3, AT4; AT11, AT12, AT13, AT21, AT22, AT23, AT31, AT32, AT33) strömungstechnisch verbunden ist,
**dadurch gekennzeichnet, dass**
freie Querschnitte der Einlass-Tröge (ET1, ET2, ET3, ET11, ET12, ET13, ET21, ET22, ET23, ET31, ET32, ET33) und/oder der Auslass-Tröge (AT1, AT2, AT3, AT4; AT11, AT12, AT13, AT21, AT22, AT23, AT31, AT32, AT33) derart bemessen sind, dass sich in den verschiedenen Abschnitten der Röhrchen-Anordnung (RA; RA1, RA2, RA3) eine Vergleichmäßigung der Strömungsgeschwindigkeit des Kühlmediums ergibt.

2. Kühlanordnung nach Anspruch 1,
**dadurch gekennzeichnet, dass**
zur Vergleichmäßigung der Strömungsgeschwindigkeiten in den verschiedenen Abschnitten der Röhrchen-Anordnung (RA; RA1, RA2, RA3) Blenden (B1, B2, B3; B11, B12, B13, B21, B22, B23, B31, B32, B33) vorgesehen sind.

3. Kühlanordnung nach Anspruch 2,
**dadurch gekennzeichnet, dass**
die Blenden (B1, B2, B3; B11, B12, B13, B21, B22, B23, B31, B32, B33) in einen jeweiligen Anschlussbereich (AET1, AET2, AET3; AET11, AET12, AET13, AET21, AET22, AET23, AET31, AET32, AET33) der Einlass-Tröge (ET1, ET2, ET3; ET11, ET12, ET13, ET21, ET22, ET23, ET31, ET32, ET33) an die Haupt-Einlassleitung (1) vorgesehen sind.

4. Kühlanordnung nach einem der Ansprüche 1 bis 3,
**dadurch gekennzeichnet, dass**
der freie Querschnitt des der Einlassöffnung (2) der Haupt-Einlassleitung (1) nächstgelegenen Einlass-Trogs (ET1, ET2, ET3; ET11, ET12, ET13, ET21, ET22, ET23, ET31, ET32, ET33) ≥ den freien Querschnitten der weiteren Einlass-Tröge (ET1, ET2, ET3; ET11, ET12, ET13, ET21, ET22, ET23, ET31, ET32, ET33) desselben Einlass-Zweiges (EZ; EZ1, EZ2, EZ3) ist.

5. Kühlanordnung nach einem Anspruch 4,
**dadurch gekennzeichnet, dass**
der freie Querschnitt des der Einlassöffnung (2) der Haupt-Einlassleitung (1) nächstgelegenen Einlass-Trogs (ET1, ET2, ET3; ET11, ET12, ET13, ET21, ET22, ET23, ET31, ET32, ET33) > dem freien Querschnitt des der Einlassöffnung (2) am weitesten entfernt gelegenen Einlass-Trogs (ET1, ET2, ET3; ET11, ET12, ET13, ET21, ET22, ET23, ET31, ET32, ET33) desselben Einlass-Zweiges (EZ; EZ1, EZ2, EZ3) ist.

6. Kühlanordnung nach einem der Ansprüche 1 bis 5,
**dadurch gekennzeichnet, dass**
entlang der Haupt-Einlassleitung (1) wenigstens zwei hintereinander angeordnete Einlass-Zweige (EZ1, EZ2, EZ3) vorgesehen sind und ein mittlerer freier Querschnitt der Einlass-Tröge (ET11, ET12, ET13, ET21, ET22, ET23, ET31, ET32, ET33) eines der Einlass-Zweige (EZ1, EZ2, EZ3) mit zunehmendem Abstand dieses Einlass-Zweiges (EZ1, EZ2, EZ3) zu der Eingangs-öffnung (2) der Haupt-Einlassleitung (1) zunimmt.

7. Elektrische Antriebskomponente, wie eine Batterie oder eine Brennstoffzelle,
**dadurch gekennzeichnet, dass**
sie mit einer Kühlanordnung nach einem der Ansprüche 1 bis 6 ausgestattet ist.

8. Elektrische Antriebskomponente nach Anspruch 7,
**dadurch gekennzeichnet, dass**
die Röhrchen der Röhrchenanordnung (RA; RA1, RA2, RA3) auf zueinander parallelen Ebenen angeordnet sind und Zellen (Z) der elektrischen Antriebskomponente in freien Zwischenräumen der Röhrchenanordnung (RA; RA1, RA2, RA3) angeordnet sind.
